Europäisches Patentamt

European Patent Office

Office européen des brevets

(19)

(11) **EP 0 650 164 B1**

(12) **EUROPEAN PATENT SPECIFICATION**

(45) Date of publication and mention
of the grant of the patent:
**14.01.1998 Bulletin 1998/03**

(51) Int Cl.⁶: **G11B 21/08**

(21) Application number: **95100166.8**

(22) Date of filing: **06.11.1990**

(54) **Track jump control devices**

Spursprung-Steuervorrichtungen

Dispositifs de contrôle de saut de piste

(84) Designated Contracting States:
**DE FR GB NL**

(30) Priority: **15.11.1989 JP 295112/89**

(43) Date of publication of application:
**26.04.1995 Bulletin 1995/17**

(62) Document number(s) of the earlier application(s) in
accordance with Art. 76 EPC:
**90312136.6 / 0 430 456**

(73) Proprietor: **SONY CORPORATION**
**Tokyo (JP)**

(72) Inventor: **Terada, Akio, c/o Int. Prop. Div.,**
**Sony Corp.**
**Tokyo 141 (JP)**

(74) Representative: **Cotter, Ivan John et al**
**D. YOUNG & CO.**
**21 New Fetter Lane**
**London EC4A 1DA (GB)**

(56) References cited:
**EP-A- 0 318 443**          **EP-A- 0 372 953**
**US-A- 4 481 613**          **US-A- 4 788 421**

 • **PATENT ABSTRACTS OF JAPAN vol. 12 no. 86**
   **(P-677) [2933] ,18 March 1988 & JP-A-62 219377**
   **(MITSUBISHI) 26 September 1987,**

**Description**

This invention relates to track jump control devices for moving a scanning head scanning recording tracks on a disc-shaped recording medium to a target track. This invention may be applied to, for example, an optical disc device in which the recording track formed on the optical disc is scanned by an optical beam of an optical head for recording and/or reproducing information signals.

As optical discs, there are known an over-writable optical disc, such as a magneto-optical disc, a write-once type optical disc or an unrewritable ROM type optical disc.

With an optical disc device employing these optical discs as recording media, focusing servo or tracking servo is applied to an optical head having therein a laser diode for supplying a data recording and/or reproducing laser beam and a photodetector for detecting the reflected laser light from the optical disc, whilst the optical disc is rotated at a constant angular velocity or at a constant linear velocity. The recording track on the optical disc in the form of a circular pattern is scanned in this manner by the laser light for performing data recording or reproduction.

With such an optical disc apparatus in which a recording track or tracks formed on an optical disc in a circular pattern is scanned by a light beam from an optical head for recording and/or reproducing signals along said recording track, it is necessary to perform tracking control so that the recording track will be correctly scanned by the beam spot of the light beam scanning the recording track. To this end, a tracking error signal corresponding to the deviation of the light spot from the recording track in the track pitch direction is derived from the optical head and fed back to a tracking actuator driving circuit for bringing the centre of the light beam spot into coincidence with the track centre, so effecting tracking control. There are known a three-beam method and a push-pull method as the methods for detecting tracking errors in the optical disc apparatus.

In known optical disc apparatus, when the beam spot traverses the recording track, a tracking error signal STE which is changed sinusoidally as indicated by the formula:

$$STE = A\sin(2\pi \frac{X}{P})$$

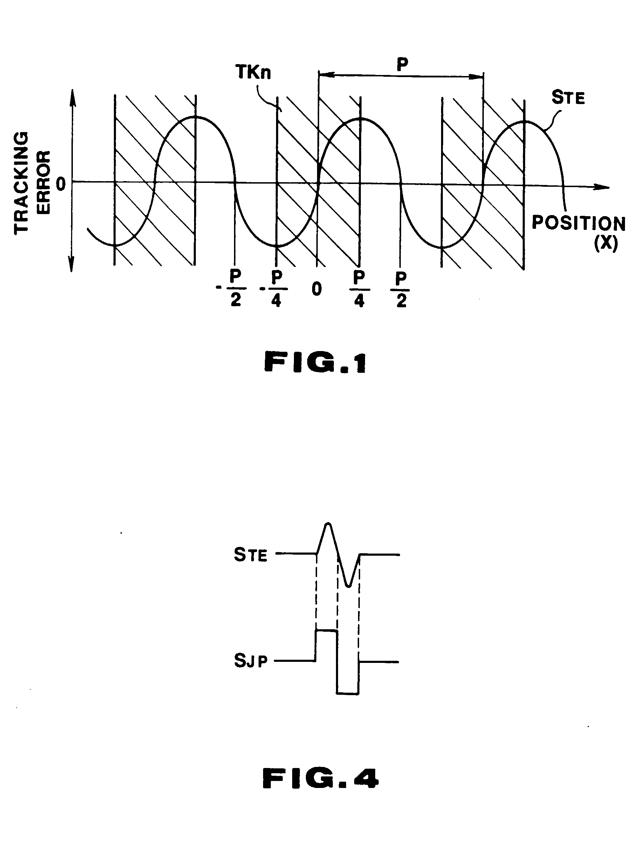

wherein X denotes the displacement of the beam spot from a track centre of a recording track TK (n) in the track pitch direction and P denotes the track pitch, is derived from a detection output from the optical head, as shown in Figure 1, and tracking control is performed so that the tracking error signal STE will be reduced to zero.

On the other hand, for a track jumping operation, that is for shifting the beam spot to an adjacent track or to a track spaced by several tracks from the current track, the tracking control is turned off and the optical head is moved at an increased speed in a controlled manner so that the target speed will be reduced to approximately zero at the target track position, and the tracking control is turned on as soon as the target track position is reached to effect the beam spot landing on the target track.

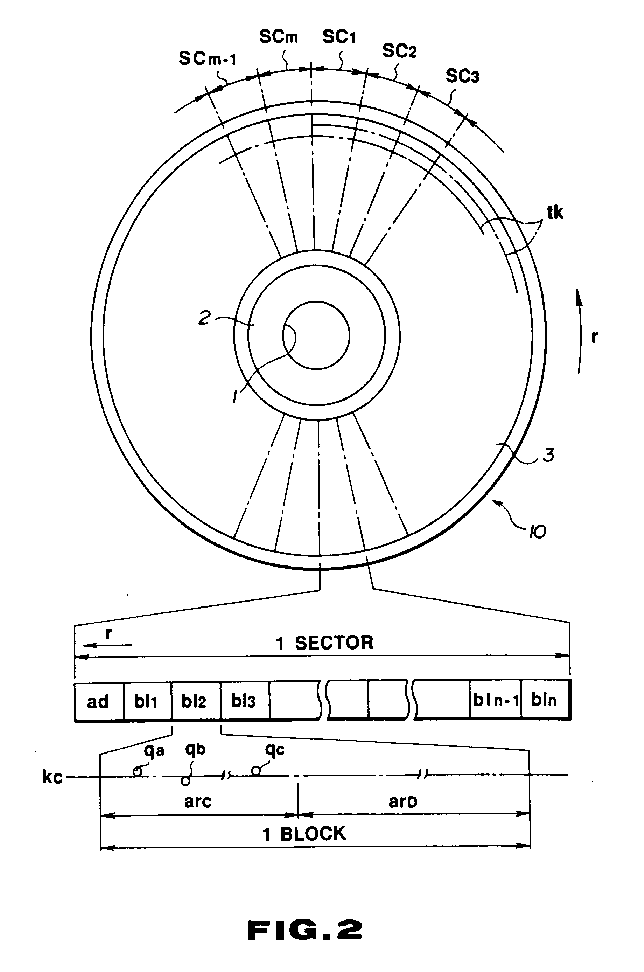

As one of the techniques for realizing a unified recording format for the above enumerated various optical discs, a so-called sampled servo technique is proposed, according to which, similarly to the so-called sector servo in a hard magnetic disc, servo signals are recorded, that is preformatted, by clock pits or tracking pits at a predetermined distance or angular interval on the concentrically or spirally extending track or tracks on the disc, these discrete servo signals being sample-held during disc rotation to effect continuous servo control . A known optical disc 10 having such a recording format is shown for example in Figure 2.

Referring to Figure 2, the optical disc 10 has an annular label section 2 around a central opening 1, and an annular recording surface section 3 extending around the label section 2. In the recording surface section 2 a spirally extending recording track tk is formed about the opening 1. Each turn of the track tk is divided into a predetermined number m, herein 32, of sectors $SC_1$, $SC_2$, ..., $SC_m$. Those bearing the same postscript number in the respective tracks, such as $SC_1$, are arrayed in the same radial direction of the disc 10. The disc 10 is loaded into an optical disc recording/reproducing apparatus, and is rotated in the direction shown by an arrow r so as to be used for data recording and/or reproduction with the aid of an optical beam.

Each sector $SC_1$, $SC_2$, ... or $SC_m$ in each circular track comprises an address data section ad at the leading end and a predetermined number n, such as 43, of blocks $bl_1$, $bl_2$, ... $bl_n$, arrayed next to the address data section ad along the track. The blocks $bl_1$, $bl_2$, ..., $bl_n$, are so arrayed that the blocks bearing the same postscript, such as blocks $bl_1$, of the sectors $SC_1$, $SC_2$, ..., $SC_m$ are arrayed in the radial direction of the disc 10. Each of the blocks $bl_1$, $bl_2$, ..., $bl_n$ of the sectors $SC_1$, $SC_2$, ..., $SC_m$ has a control recording region arC at the start end, followed by a data record region arD to form a unit recording section. In the control record region arC of each block $bl_1$, $bl_2$, ... or $bl_n$, there are formed tracking data pits qa and qb on the outer and inner sides of a track centre line kc and a clock data pit qc on the track centre line kc.

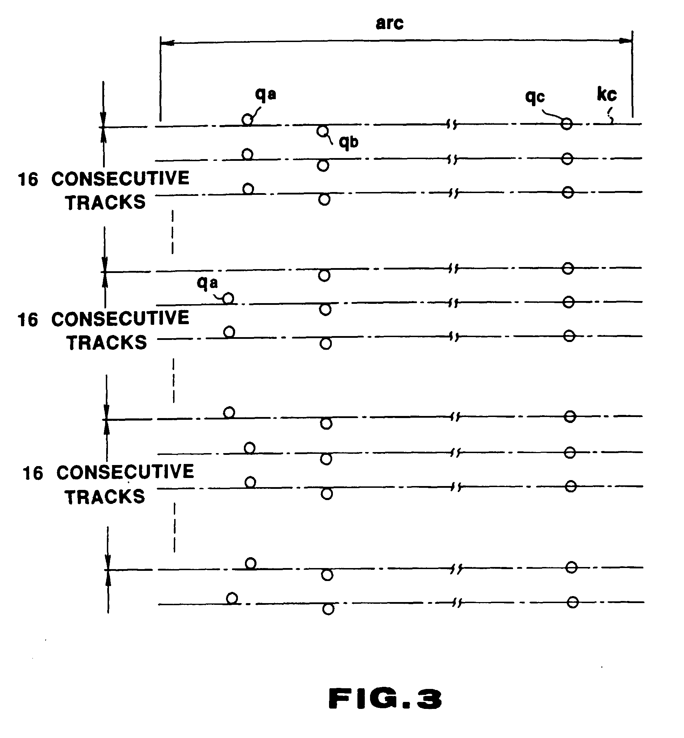

The manner in which the track data pits qa and qb and the block data pit qc are arrayed in a direction normal to the track centre line kc, that is along the radius of the disc 10, will now be explained. Referring to Figure 3, the tracking data pits qb and the clock data pits qb are each arrayed in one line along the radius, whereas the tracking data pits qa are offset at an interval of sixteen consecutive tracks in the longitudinal direction of the track tk. When the disc 10, in which the tracking data pits qa and qb and the clock data pits qc are provided in this manner in the control record region arC, is loaded in the recording/reproducing apparatus so as to be used for data recording or reproduction with the aid of an optical beam, the tracking data pits qa and qb, and the clock data pits qc of the control record region arC are read by the light beam so as to be used for various servo operations or clock generation. That is, clock signals are detected from the detected output of the clock data pits qc to generate necessary timing clocks, while the tracking error is found on the basis of the detected output of the tracking data pits qa and qb arrayed on the outer and the inner sides of the track centre line kc to perform tracking control. On the other hand, focusing control is performed on the basis of the detected output of the mirror surface region. The detected output of the tracking data pits qa is also used for performing a so-called traverse counting to find the number of the track being scanned by the optical head on the basis of the above mentioned offset arraying of the tracking data pits qa at the interval of sixteen consecutive tracks.

An optical disc usually suffers from offsets, so that the target track position deviates during the disc rotation. Thus the speed of movement of the optical head detected by a speed sensor provided on a mechanical base fails to indicate the true speed with which the light spot is moved on the optical disc.

Recently, an attempt has been made to detect the speed with which the light beam spot travels on the optical disc.

However, with the sampled servo system, the track traversing speed cannot be detected unless the light spot traverses one track within a time at least twice the sampling period, as may be demonstrated by the sampling theorem, so during high speed movement the speed cannot be detected.

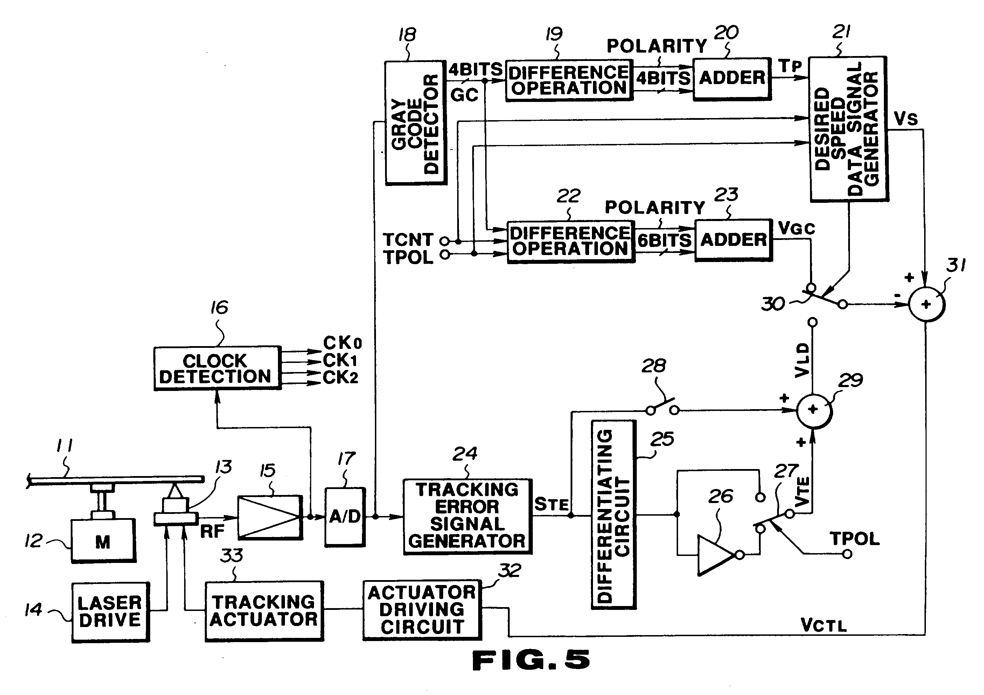

On the other hand, with the optical disc device of the sampled servo system, the tracking error signal STE is produced on the basis of the detected output of the tracking data pits qa and qb, and a track jump driving signal SJP is formed from the tracking error signal STE, as shown in Figure 4. The track jump driving signal SJP is supplied in an open loop to a tracking actuator to perform track jump control by a feed-forward operation.

With the above described optical disc device of the sampled servo system, the tracking error signal STE is produced on the basis of the detected output of the tracking data pits qa and qb, and the track jump driving signal SJP is formed from the tracking error signal and supplied in an open loop to a tracking actuator to effect the track jump drive by a feed-forward control operation, so that the disc device is susceptible to malfunction by disturbances and, above all, by vibrations, and hence the stable track jump operation cannot be performed in an environment likely to undergo excessive vibrations.

On the other hand, when the optical head is moved to the target track position to perform data recording and/or reproduction on or from the target recording track, the accessing speed cannot be detected with higher accuracy and hence the target track cannot be reached by one accessing operation with resultingly prolonged access time.

When the track jump operation is performed with the use of gray code data, supposing that the gray code data, supposing that the gray code data are recorded at an interval of 12 μs on a recording track having a track pitch of, for example, 1.6 μm, only the speed data up to 0.13 m/s can be detected, on account of the properties of the gray code data. In addition, with the servo range of the tracking servo equal to 3 kHz, for example, track capturing is not possible at an approach speed of more than 8 mm/s, with the result that direct landing on the target track cannot be achieved.

European Patent Application Publication No. EP-A-0 318 443 discloses a track jump control device for moving a scanning head scanning recording tracks on a disc-shaped recording medium to a target track. The device comprises differentiating means for differentiating a tracking error signal corresponding to a deviation with respect to said recording track in a track pitch direction, to produce a differentiated signal, and polarity inverting means for inverting the polarity of the differentiated signal during off-track and for supplying a differentiated signal having the same polarity during on-track as during off-track as a speed data signal. That signal is then integrated, and an error detection means detects a speed error data signal indicating an error between a target speed data signal, generated on the basis of a signal from the medium, and the integrated signal. Track jump control is made on the basis of the speed error data signal from the error detection means.

EP-A-0 318 443 discloses two track jump modes, a first as outlined above and a second where the speed of the head is calculated from current track position signals, a switching means switching from the second to the first mode when the target track position is approached.

Japanese Patent Application Publication No. JP-A-62 219 377 (an English language abstract of which appears at PATENT ABSTRACTS OF JAPAN, Vol. 12, No. 86 (P-677) [2933], 18 March 1988) discloses an arrangement in which a tracking error signal is differentiated and compared with a target value.

According to the invention there is provided a track jump control device for moving a scanning head scanning recording tracks on a disc-shaped recording medium to a target track, the device comprising:

differentiating means for differentiating a tracking error signal, corresponding to a deviation with respect to said recording track in a track pitch direction, to produce a differentiated signal;
polarity inverting means for inverting the polarity of said differentiated signal during off-track and for supplying a differentiated signal having the same polarity during on-track as during off-track as a speed data signal;

error detection means for detecting a speed error data signal indicating an error between a target speed data signal and the speed data signal from the polarity inverting means, track jump control being made on the basis of said speed error data signal from said error detection means;

current position data detection means for detecting current track position data from gray code data indicating the recording track of said medium on a track-by-track basis;

target speed data signal generating means for forming said target speed data signal on the basis of current track position data obtained from said current position data detection means;

speed data signal forming means for forming a speed data signal by detecting changes in said gray code data, said speed data signal forming means being operative to form a high resolution speed data signal by interpolation, in which a track pitch is divided by N, N being an integer, by a first control signal which is a version in binary form of said tracking error signal and a second control signal which is a version in binary form of a signal 90° phase different from said tracking error signal; and

switching means for switching the speed data signal to be supplied to said error detection means from said speed data signal from said speed data signal forming means to said speed data signal from said polarity inverting means in the vicinity of the target track position on the basis of the current track position data obtained from said current position data detection means.

A preferred embodiment of the invention described below provides a track jump control device for moving a scanning head scanning a recording track of a disc-shaped recording medium to a target track position, whereby direct landing on the target track may be achieved quickly and positively even in an environment susceptible to disturbances. In the track jump control device according to the preferred embodiment of the invention, the tracking error signal corresponding to the deviation from the recording track in the track pitch direction is differentiated by the differentiating means and the resulting differentiated signal is rectified by the polarity inverting means to produce the speed data signal, which is then used to apply speed control in a closed loop to realize a track jump in a manner immune to disturbances, and to achieve positive direct landing on the target track. Also, in the preferred embodiment of track jump control device according to the invention, current track position data is detected by current track position detection means from gray code data indicating the recording track of the disc-shaped recording medium on a track-by-track basis. The target speed data signal is formed by target speed data signal forming means on the basis of current track position data, while the speed data signal is formed by detecting changes in the gray code data by speed data signal forming means. The speed data signal to be supplied to the error detection means is switched by switching means in the vicinity of the target track position to effect a track jump operation in two different operating modes. That is, in an area more distant from the target track position, the speed data signal formed from the gray code data by the speed data signal forming means is supplied to the error detection means to effect a high speed track jump operation. On the other hand, in the vicinity of the target track, the speed data signal formed from the tracking error signal is supplied to the error detection means to effect a closed-loop track jump control.

The invention will now be described by way of example with reference to the accompanying drawings, throughout which like parts are referred to by like references, and in which:

Figure 1 is a signal waveform diagram for illustrating tracking error signals in an optical disc device;

Figure 2 shows a recording format for an optical disc of a sampled servo system;

Figure 3 shows the contents of the preformat of an optical disc of the sampled servo system;

Figure 4 is a signal waveform diagram for illustrating a track jump operation;

Figure 5 is a block diagram showing an arrangement of a track jump control circuit according to the present invention;

Figure 6 shows the contents of the preformat of an optical disc employed in an optical disc device to which the track jump control circuit of Figure 5 is applied;

Figure 7 is a signal waveform diagram showing a target speed data signal;

Figure 8 is a signal waveform diagram for illustrating the operation of a target speed data signal generating section;

Figure 9 is a signal waveform diagram for illustrating the operation of a second difference operating circuit of the track jump control circuit; and

Figure 10 is a signal waveform diagram for illustrating the operation of polarity inverting means of the track jump control circuit.

The track jump control device of the present invention is applied to an optical disc device in which, as shown in Figure 5, a recording track on an optical disc 11 is scanned by a light beam from an optical head 13 for recording and/or reproducing data along the recording track.

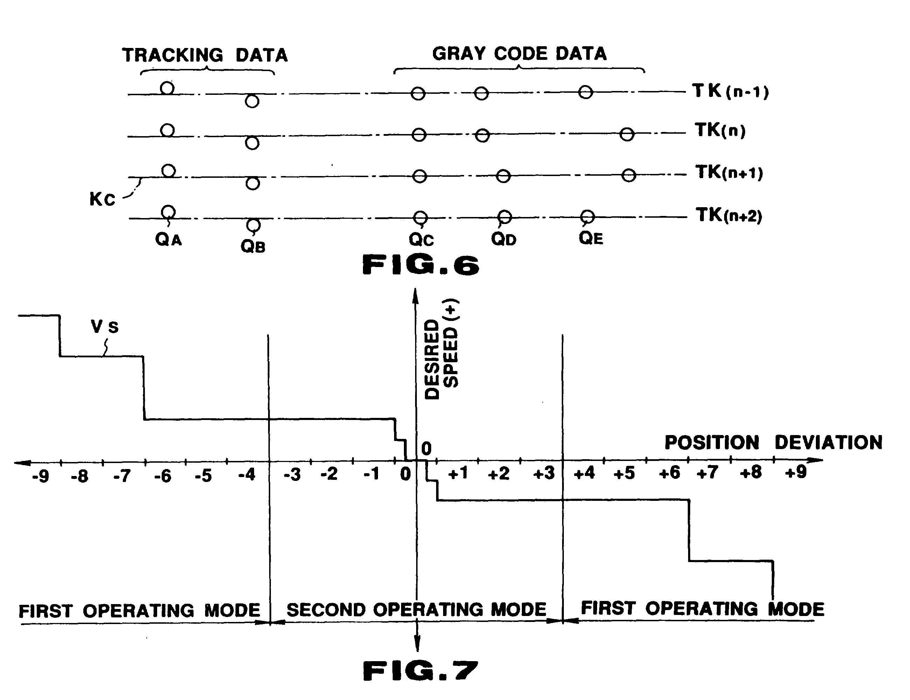

Referring to Figure 6, the disc 11 has a large number of recording tracks TK(n) on its recording surface section in a form of a circular pattern. In a control record region of each recording track TK(n), a pair of tracking data pits QA and QB are arrayed at a predetermined distance from each other in the track direction with an offset of one-fourth of the track pitch on the outer and inner peripheries of a track centre line KC. There are also arrayed a clock data pit QC and gray code data pits QD and QE at an interval of sixteen recording tracks on the track centre line KC in the control record region for indicating each recording track TK(n) on the track-by-track basis with the clock data pit QC as the reference.

The disc 11 is driven at a constant angular velocity (CAV) by a spindle motor 12 to which spindle servo is applied.

The optical head 13 for scanning the recording tracks of the rotating disc 11 by a light beam is formed of a laser diode driven by a laser driving circuit 14 to produce a laser light beam, a focusing actuator for converging the laser light from the laser diode on the recording track of the disc 11 by an objective lens, and a photodetector for detecting the light reflected by the disc 11. The optical head 13 supplies the detection output of the photodetector, as the reproduced RF signal, to a clock regenerating circuit 16 and an analogue/digital (A/D) converter 17 by way of a head amplifier 15. The optical head 13 is mounted for movement radially of the disc 11 and may be moved along the radius of the disc 11 by a tracking actuator 33 as will be explained subsequently.

The clock regenerating circuit 16 performs clock detection or regeneration with a phase locked loop circuit on the basis of the detection output of the clock data pits QC in the reproduced RF signal from the optical head 13, and generates various sampling clocks CK1 and CK2 and sync clocks CK0 for overall system synchronization.

The A/D converter 17 converts the signal level of the reproduced RF signal into digital data formed by, for example, eight bits. The digital data obtained by the A/D converter 17 are supplied to a signal reproducing system, not shown, while being also supplied to a gray code detector 18 and to a tracking error signal generator 24.

The gray code decoder 18 discriminates the pit pattern in the detection output of the gray code data pits QD and QE in the reproduced RF signal to decode the 4-bit gray code data GC indicating the current scanning position of the light spot of the optical head 12 on a track-by-track basis from the digital data from the A/D converter 17. The gray code data GC from the gray code decoder 18 is supplied to first and second difference operating circuits 19 and 22.

The first difference operating circuit 19 processes the above mentioned 4-bit gray code data GC from the gray code decoder 18 to find the difference of the current gray code data from the preceding gray code data, and to transmit the resulting 4-bit difference data to a first adder-counter 20 along with the polarity bit. This first adder-counter 20 cumulatively adds the 4-bit difference data with the annexed polarity bit to form the 8-bit current track position data Tp. The first adder-counter 20 is initialized at the start time of the track jump operation by a system controller, not shown, so that the offset will be reduced to zero at the target track is detected, along with the polarity, by the first adder-counter 20, so as to be supplied as the above mentioned 8-bit current track position data Tp to a target speed data signal generator 21.

To the target speed data signal generator 21 are supplied a control signal TCNT, which is a version in binary form of the tracking error signal STE produced during a track jump, and a control signal TPOL which is a version in binary form of a signal 90° phase different from the tracking error signal STE.

The target speed data signal generator 21 generates, from the current track position data Tp obtained from the first adder-counter 20 during the track jump and the control signals TCNT and TPOL, a target speed data signal VS, shown in Figure 7, which determines an access speed of the optical head 12 moved along the radius of the disc 11 by the tracking actuator 33, and transmits the so-produced signal VS to a comparator 31, while also transmitting a jump mode switching control signal CTLSW, at a position which is offset a predetermined number of tracks, herein ±3 tracks, from the target track position, to a signal selection switch circuit 30.

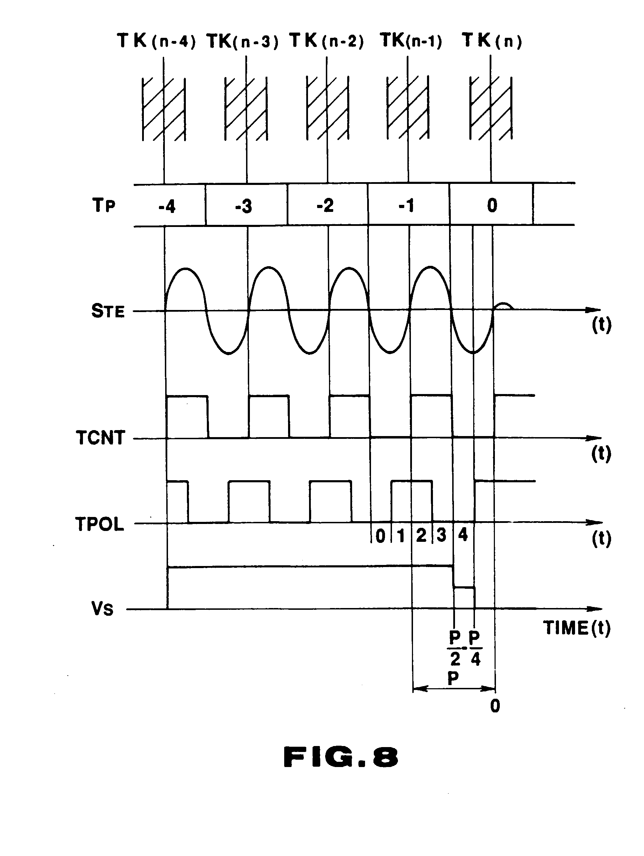

Referring to Figure 8, the target speed data signal generator 21 performs an interpolating operation of dividing the track-by-track current track position data Tp obtained from the first adder-counter 20 into four equal parts by the control signal TCNT which is the version in the binary form of the tracking error signal STE obtained during track jump and by the control signal TPOL which is the version in the binary form of the signal 90° phase different from the tracking error signal STE, so that the target speed will be lowered by one half at a position one half the track pitch ahead of the target track TK(n), and also so that the target speed will be reduced to zero at a position one fourth the track pitch ahead of the target track TK(n).

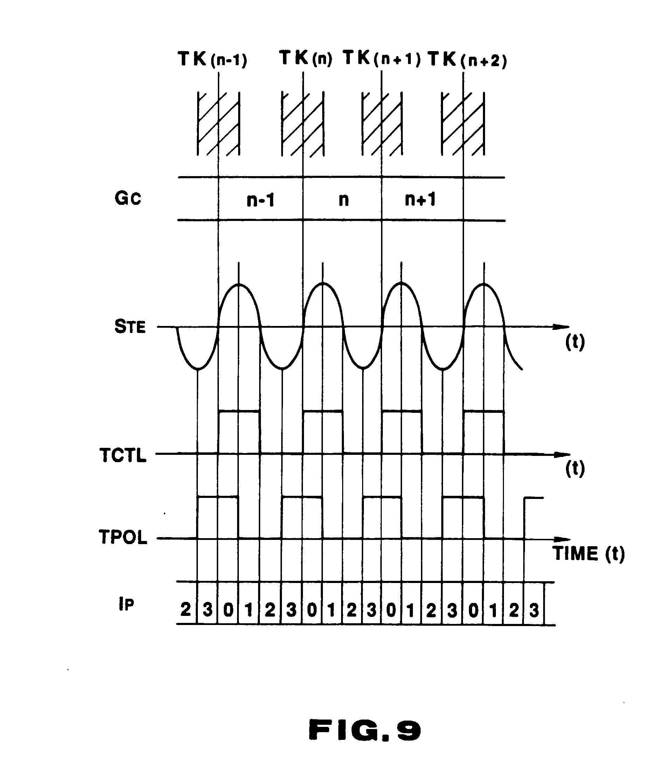

The control signal TCNT and TPOL are also supplied to the second difference operating circuit 22. As shown in Figure 9, the second difference operating circuit 22 generates, when processing difference data for the track-by-track current position data indicated by the gray code data GC obtained at the gray code detector 18, an interpolating signal IP formed by dividing each track pitch P into four equal portions on the basis of the aforementioned control signals TCNT and TPOL to raise the resolution of the speed data by the interpolating operation employing the interpolating signal IP, and transmits the 6-bit difference data indicating the speed data to a second adder-counter 23 along with polarity data. The second adder-counter 23 performs a cumulative addition of the 6-bit difference data with the annexed polarity bit eight times to generate a speed data signal VGC which has been raised further in resolution by a factor of eight.

The speed data signal VGC, which is formed by the second difference operating circuit 22 and the second adder-counter 23 from the gray code data GC obtained at the gray code detector 18, supplied, when the current track position is distant more than ±3 tracks from the target track position, to the comparator 31, by way of the signal selection switch circuit 30 controlled by the jump mode switching control signal CTLSW.

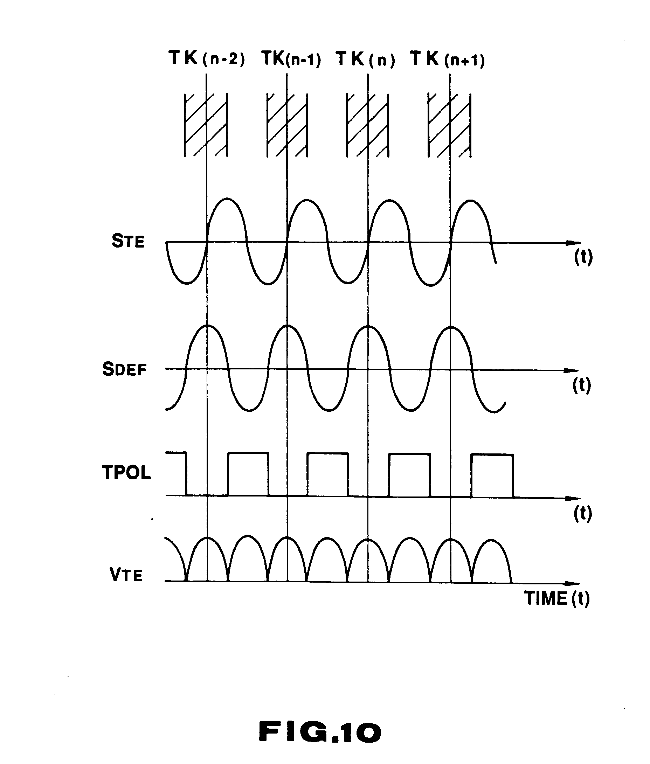

On the other hand, the tracking error signal generator 24 processes the digital data from the A/D converter 17 to find the signal level difference of the detection outputs of the tracking data pits QA and QB in the reproduced RF signals to form the tracking error signal STE which is changed sinusoidally in proportion to the offset from the track centre of the recording track TK(n) in the track pitch direction of the recording track TK(n) as shown in Figure 10. The tracking error signal STE, thus produced in the tracking error signal generator 24, is supplied to a differentiating circuit 25, while being also supplied to an adder 29 by way of a switch 28.

The differentiating circuit 25 differentiates the tracking error signal STE in the form of a sine wave, that is the position data component, to form a differentiated signal SDEF in the form of a cosine wave as the speed data component. The differentiated signal SDEF from the differentiating circuit 25 is supplied to a signal selection switch circuit 27 both directly and by way of a polarity inverting circuit 26.

The signal selection switch circuit 27 performs a switching operation under control by the control signal TPOL which is the version in binary form of the signal 90° phase different with respect to the tracking error signal STE. The signal selection switching circuit 27 selects the differentiated signal SDEF supplied directly from the differentiating circuit 25 during on-track and polarity-inverted differentiated signal SDEF supplied from the differentiating circuit 25 by way of the polarity inverting circuit 26 during off-track to rectify the differentiated signal SDEF to form the full-wave rectified speed data signal VTE having the same polarity during off-track as during on-track, as shown in Figure 10. The speed data signal VTE, obtained from the signal selection switch circuit 27, is supplied to the adder 29.

The adder 29 adds the speed data signal VTE to the tracking error signal STE supplied thereto from the tracking error signal generator 24 by way of the switch 28. It is noted that the switch 28 is turned off and on during track jump and after termination of track jump at which time the tracking control is turned on. When the current track position is within ±3 tracks from the target track position, the addition output signal from the adder 29 is supplied as a landing control signal VLD to the comparator 31 by means of the signal selection switch circuit 30 which is controlled by the aforementioned jump mode switching control signal CTLSW.

The comparator circuit 31 compares either the speed data signal VGC supplied from the second adder-counter 23 by way of the signal selection switch circuit 30 or the landing control signal VLD from the adder 29, to the target speed data signal Vs from the target speed data signal generator 21 to supply the resulting error signal as the drive control signal VCTL to an actuator driving circuit 32.

The actuator driving circuit 32 causes the driving current corresponding to the driving control signal VCTL to flow through a driving coil of the tracking actuator 33 for moving the optical head 12 to the target track position.

That is, with the above track jump control circuit, the gray code data GC indicating the recording tracks TK(n) of the disc 11 on the track-by-track basis is produced by the gray code detector 18 and, on the basis of the current track position data Gp obtained from the gray code data GC, the target speed data signal Vs relative to the current track position is formed at the target speed data generator 21, while the signal selection switch circuit 30 is controlledly switched at a position ±3 tracks away from the target track position between the two different operating modes to effect track jump to the target track position on the basis of the target speed data signal VS formed from the gray code data GC.

First, during the first operating mode when the scanning head is distant more than ±3 tracks from the target track position, changes in the current track position data indicated by the gray code data GC are detected by the second difference operating circuit 22 and cumulatively added in the second adder-counter 23 to produce the speed data signal VGC which is selected at the signal selection switch circuit 30 and an error signal of the speed data signal VGC from the target speed data signal VS is supplied from the comparator circuit 31 as the driving control signal VCTL to the actuator driving circuit 32. For this operating mode, a high-speed track jump operation may be achieved with the use of the speed data signal VGC obtained from the gray code data GC.

In addition, in the present embodiment, when the difference data of the track-by-track current track data indicated by the gray code data GC obtained by the gray code decoder 18 is processed as the speed data, the interpolating operation of dividing each track pitch into four equal portions by the control signals TCNT and TPOL is performed to raise the speed data resolution by a factor of four while the difference data indicating the speed data and the polarity bits are cumulatively added eight times to form the speed data signal VGC which is raised in resolution by a factor of eight, so that it becomes possible to produce speed data with a resolution of approximately 2 mm/s at a sampling period of 200 μs or 5 kHz from the gray code data GC to perform a speed control with the range of about 300 Hz to realize a high-speed track jump operation.

During the second operating mode, for which the scanning head is within ±3 tracks with respect to the target track position, the tracking error signal STE obtained at the tracking error signal generator 24 is differentiated by the differentiating circuit 25 to produce the differentiated signal SDEF, which is rectified by the polarity inverting circuit 26 and the signal selection switch circuit 27 to produce the rectified speed data signal VTE. This signal VTE is selected by the signal selection switch circuit 30 and the error signal of the speed data signal VTE from the target speed data signal VS is supplied as the drive control signal VCTL from the comparator circuit 31 to the actuator driving circuit 32. During this operating mode, the speed data signal VTE obtained from the tracking error signal STE may be used to apply a closed loop speed control to perform a track jump operation which is less susceptive to disturbances. The speed data with a sampling period of about 25 μs or 40 kHz with an infinitesimally small resolution may be obtained from the tracking error signal STE such that the speed data may be effectively detected up to the resolution of approximately 5 mm/s to perform a broad range speed control with the range of approximately 3 kHz. In this manner, a direct landing operation may be achieved positively.

In addition, in the present embodiment, the target speed data signal generator 21 generates the target speed data signal VS for lowering the target speed by one half at a position one half the track pitch from the target track TK(n) and reducing the target speed to zero at a position one-fourth the track pitch ahead of the target track TK(n), so that tracking control may be started with lesser overshoot at the time of the above mentioned direct landing during the first operating mode.

In this manner, in the track jump control device of the present embodiment, a high speed track jump control may be performed during the first operating mode by ±3 tracks, while direct landing on the target track may be achieved during the second operating mode when the scanning head is within ±3 tracks from the target track position.

**Claims**

1. A track jump control device for moving a scanning head (13) scanning recording tracks on a disc-shaped recording medium (11) to a target track, the device comprising:

   differentiating means (25) for differentiating a tracking error signal (STE), corresponding to a deviation with respect to said recording track in a track pitch direction, to produce a differentiated signal (SDEF);
   polarity inverting means (26) for inverting the polarity of said differentiated signal (SDEF) during off-track and for supplying a differentiated signal having the same polarity during on-track as during off-track as a speed data signal;
   error detection means (31) for detecting a speed error data signal (VCTL) indicating an error between a target speed data signal (Vs) and the speed data signal from the polarity inverting means (26), track jump control being made on the basis of said speed error data signal (VCTL) from said error detection means (31);
   current position data detection means (18) for detecting current track position data from gray code data indicating the recording track of said medium (11) on a track-by-track basis;
   target speed data signal generating means (21) for forming said target speed data signal (Vs) on the basis of current track position data obtained from said current position data detection means (18);
   speed data signal forming means (22, 23) for forming a speed data signal (VGC) by detecting changes in said gray code data , said speed data signal forming means (22, 23) being operative to form a high resolution speed data signal by interpolation, in which a track pitch is divided by N, N being an integer, by a first control signal (TCNT) which is a version in binary form of said tracking error signal (STE) and a second control signal (TPOL) which is a version in binary form of a signal 90° phase different from said tracking error signal; and
   switching means (30) for switching the speed data signal to be supplied to said error detection means (31) from said speed data signal (VGC) from said speed data signal forming means (22, 23) to said speed data signal from said polarity inverting means (26) in the vicinity of the target track position on the basis of the current track position data obtained from said current position data detection means (18).

2. A device according to claim 1, wherein said switching means (30) is controlled to switch between the speed data signal (VGC) from said speed data signal forming means (22, 23) and said speed data signal from said inverting means (26) on the basis of an output signal from the speed data signal generating means (21).

3. A device according to claim 1 or claim 2, wherein said speed data signal forming means (22, 23) is formed by a difference operating section (22) for performing said interpolation operation on the basis of said first and second control signals (TCNT, TPOL), and an adder (23) for forming the speed data signal (VGC) from polarity data and difference data supplied thereto from said difference operating section (22).

**Patentansprüche**

1. Spursprung-Steuereinrichtung zur Verschiebung eines Abtastkopfes (13), der Aufzeichnungsspuren auf einem scheibenförmigen Aufzeichnungsträger (11) abtastet, auf eine Zielspur, wobei die Einrichtung aufweist:

eine Differenziereinrichtung (25) zur Differenzierung eines Spurnachführungsfehlersignals (STE), welches einer Abweichung in bezug auf die Aufzeichnungsspur in einer Spurteilungsrichtung entspricht, um ein differenziertes Signal (SDEF) zu erzeugen;

eine Polaritätsinvertierungseinrichtung (26) zur Invertierung der Polarität des differenzierten Signals (SDEF) während des Außerspurbetriebs und zur Lieferung eines differenzierten Signals, welches die gleichen Polarität während eines spurgenauen Betriebs wie während des Außerspurbetriebs hat, als ein Geschwindigkeitsdatensignal;

eine Fehlerermittlungseinrichtung (31) zur Ermittlung eines Geschwindigkeitsfehlerdatensignals (VCTL), welches einen Fehler zwischen einem Zielgeschwindigkeitsdatensignal (Vs) und dem Geschwindigkeitsdatensignal von der Polaritätsinvertierungseinrichtung (26) anzeigt, wobei die Spursprung-Steuerung auf der Basis des Geschwindigkeitsfehlerdatensignals (VCTL) von der Fehlerermittlungseinrichtung (31) ausgeführt wird;

eine Momentan-Positionsdatenermittlungseinrichtung (18) zur Ermittlung von laufenden Spurpositionsdaten aus Gray-Code-Daten, die die Aufzeichnungsspur des Trägers (11) spurweise anzeigen;

eine Zielgeschwindigkeits-Datensignalerzeugungseinrichtung (21) zur Bildung des Zielgeschwindigkeitsdatensignals (Vs) auf der Basis der laufenden Spurpositionsdaten, die aus der Momentan-Positionsdatenermittlungseinrichtung (18) erhalten werden;

eine Geschwindigkeits-Datensignalbildungseinrichtung (22, 23) zur Bildung eines Geschwindigkeitsdatensignals (VGC) durch Ermittlung von Änderungen in den Gray-Code-Daten, wobei die Geschwindigkeits-Datensignalbildungseinrichtung (22, 23) ein hochauflösendes Geschwindigkeitsdatensignal durch Interpolation bilden kann, bei der eine Spurteilung durch N geteilt wird, wobei N eine ganze Zahl ist, durch ein erstes Steuersignal (TCNT), welches eine Version in Binärform des Spurnachführungsfehlersignals (STE) ist, und ein zweites Steuersignal (TPOL), welches eine Version in Binärform eines Signals ist, welches eine Phasendifferenz von 90° gegenüber dem Spurnachführungsfehlersignal hat; und

eine Umschalteinrichtung (30) zum Umschalten des Geschwindigkeitsdatensignals, welches zur Fehlerermittlungseinrichtung (31) aus dem Geschwindigkeitsdatensignal (VGC) von der Geschwindigkeits-Datensignalbildungseinrichtung (22, 23) geliefert wird, auf das Geschwindigkeitsdatensignal von der Polaritätsinvertierungseinrichtung (26) in der Nachbarschaft der Zielspurposition auf der Basis der laufenden Spurpositionsdaten, die von der Momentan-Positionsdatenermittlungseinrichtung (18) erhalten werden.

2. Einrichtung nach Anspruch 1, wobei die Umschalteinrichtung (30) gesteuert wird, um zwischen dem Geschwindigkeitsdatensignal (VGC) von der Geschwindigkeitsdaten-Signalbildungseinrichtung (22, 23) und dem Geschwindigkeitsdatensignal von der Invertierungseinrichtung (26) auf der Basis eines Ausgangssignals von der Geschwindigkeitsdaten-Signalerzeugungseinrichtung (21) umzuschalten.

3. Einrichtung nach Anspruch 1, oder 2, wobei die Geschwindigkeitsdaten-Signalbildungseinrichtung (22, 23) durch einen Differenzbetriebsabschnitt (22) zur Durchführung des Interpolationsbetriebs auf der Basis des ersten und zweiten Steuersignals (TCNT, TPOL) und einen Addierer (23) gebildet ist, um das Geschwindigkeitsdatensignal (VGC) aus den Polaritätsdaten und den Differenzdaten zu bilden, die von dem Differenzbetriebsabschnitt (22) geliefert werden.

**Revendications**

1. Dispositif de commande de saut de piste pour déplacer une tête de balayage (13) balayant des pistes d'enregistrement sur un support d'enregistrement en forme de disque (11) à une piste cible, le dispositif comprenant :

un moyen de différenciation (25) pour différencier un signal d'erreur de suivi de piste (STE), correspondant à une déviation par rapport à ladite piste d'enregistrement dans une direction de pas de piste, pour produire un signal différencié (SDEF) ;

un moyen d'inversion de polarité (26) pour inverser la polarité dudit signal différencié (SDEF) pendant le hors-piste et pour fournir un signal différencié ayant la même polarité pendant le sur-piste que pendant le hors-piste comme un signal de données de vitesse ;

un moyen de détection d'erreur (31) pour détecter un signal de données d'erreur de vitesse (VCTL) indiquant une erreur entre un signal de données de vitesse cible (Vs) et le signal de données de vitesse du moyen d'inversion de polarité (26), une commande de saut de piste étant effectuée sur la base dudit signal de données d'erreur de vitesse (VCTL) à partir dudit moyen de détection d'erreur (31) ;

un moyen de détection de données de position actuelles (18) pour détecter des données de position de piste actuelle à partir des données de code de gris indiquant la piste d'enregistrement dudit support (11) sur une base de piste à piste ;

un moyen de génération de signal de données de vitesse cible (21) pour former ledit signal de données de vitesse cible (Vs) sur la base des données de position de piste actuelles obtenues à partir dudit moyen de détection de données de position actuelles (18) ;

un moyen de formation de signal de données de vitesse (22, 23) pour former un signal de données de vitesse (VGC) en détectant des variations dans lesdites données de code de gris, ledit moyen de formation de signal de données de vitesse (22, 23) fonctionnel pour former un signal de données de vitesse de haute résolution par interpolation, dans lequel un pas de piste divisé par N, N étant un entier, par un premier signal de commande (TCNT) qui est une version sous forme binaire dudit signal d'erreur de suivi de piste (STE) et un second signal de commande (TPOL) qui est une version sous forme binaire de signal déphasé de 90° par rapport au signal d'erreur de suivi de piste ; et

un moyen de commutation (30) pour commuter le signal de données de vitesse à appliquer audit moyen de détection d'erreur (31) à partir dudit signal de données de vitesse (VGC) à partir dudit moyen de formation de signal de données de vitesse (22, 23) audit signal de données de vitesse à partir dudit moyen d'inversion de polarité (26) au voisinage de la position de piste cible sur la base de données de position de piste actuelles obtenues à partir dudit moyen de détection de données de position actuelles (18).

2. Dispositif selon la revendication 1, dans lequel ledit moyen de commutation (30) est commandé pour commuter entre le signal de données de vitesse (VGC) dudit moyen de formation de signal de données de vitesse (22, 23) et le signal de données de vitesse dudit moyen d'inversion (26) sur la base d'un signal de sortie du moyen de génération de signal de données de vitesse (21).

3. Dispositif selon la revendication 1 ou 2, dans lequel ledit moyen de formation de signal de données de vitesse (22, 23) est formé par une section de fonctionnement de différence (22) pour réaliser ladite opération d'interpolation sur la base desdits premier et second signaux de commande (TCNT, TPOL), et d'un additionneur (23) pour former le signal de données de vitesse (VGC) à partir des données de polarité et des données de différence fournies à celui-ci par ladite section de fonctionnement de différence (22).

FIG.1

FIG.4

**FIG.2**

**FIG.3**

**FIG. 5**

FIG.6

FIG.7

**FIG.8**

**FIG. 9**

**FIG.10**